# EUROPEAN PATENT APPLICATION

(11) **EP 4 686 998 A1**
(43) Date of publication of application: **04.02.2026**
(21) Application number: 24191778.0
(22) Date of filing: 30.07.2024
(51) Int. Cl.: G05D 1/00, B60W 50/00, B60W 60/00, G06N 20/00, G06Q 10/047, G01C 21/34, G06Q 10/0835, G06Q 10/083, G06Q 50/40

(54) **METHOD, APPARATUS AND COMPUTER PROGRAM PRODUCT FOR LOGISTICS ROBOT DEPLOYMENT**

(71) Applicant: HERE Global B.V., 5611 ZT Eindhoven (NL)
(72) Inventor: Borchert, Axel, 10115 Berlin (DE); Beaurepaire, Jérôme, 92400 COURBEVOIE (FR)
(74) Representative: Sariot, Eray

(57) **Abstract**

Method, apparatuses and computer program products for training machine learning models for logistics robots and routing the robots are disclosed. A method of training an ML model involves providing a route to a logistics robot, obtaining route issue indications from the robot when it fails to traverse the route as expected, and associating map objects with the issue locations. The trained model can then be used to determine the likelihood of route issues for a specific logistics robot type based on the presence of certain map objects along the route. The disclosure further involves calculating route penalty value(s) based on the likelihood and updating the route accordingly, including selection of a logistics robot type for the route.

## Description

### FIELD

The following disclosure relates to the field of robot, or robot-assisted logistics, more particularly relating to apparatuses, computer program products and methods for training and utilizing Machine Learning (ML) models for deployment of robots in logistics routes.

### BACKGROUND

Logistics and transportation are critical components of modern economies, with millions of packages and goods moving through supply chains every day. The increasing demand for fast and reliable delivery has led to significant growth in the logistics industry, particularly in e-commerce. However, autonomously completing portions of a logistic journey, in particular, the last mile - the final stage from a hub or distribution center to the customer's doorstep - remains a major challenge. Traditional methods of delivery, such as mail trucks and parcel services, are facing increasing pressure to keep up with demand.

The introduction of robots into logistics has been proposed as a potential solution to these challenges, with various types of robots being developed to navigate different environments and perform specific tasks. For example, legged robots may be better suited for navigating stairs or uneven terrain, while wheeled robots may be more energy efficient and cost effective. Humanoid robots could interact with humans in a more natural way. However, each type of robot is not without its limitations. As example drawbacks of the same robot types, legged robots may require additional energy to operate, wheeled robots may have trouble navigating steps or humanoid robots would be of infeasible complexity (and hence costly) for deploying in large numbers and may encounter public acceptance challenges. The choice of which route to traverse and which robot to use depends on various factors such as terrain complexity, environmental conditions, energy requirements, and the like.

Despite the development of different robot types, and ever more sophisticated routing approaches, logistics operations still often encounter unexpected issues that can impact delivery times and costs. Methods for learning from such issues and adapting logistics routes and robot selection accordingly would significantly improve the efficiency and reliability of logistics operations.

### SUMMARY OF SOME EXEMPLARY EMBODIMENTS

According to a first exemplary aspect, a computer-implemented method for training a machine learning (ML) model for logistics robots is disclosed, the method comprising:
- providing a route to a logistics robot, wherein the route comprises a start location, and a destination location, wherein the route traverses, at least in part, a mapped public environment;
- obtaining, from the logistics robot, a route issue indication, wherein the route issue indication comprises a route issue location for a route issue, and wherein the route issue causes the logistics robot to fail to traverse the provided route as expected;
- obtaining, from a map database, at least one map object corresponding to the route issue location; and,
- training the ML model to associate the map object with the route issue indication.

The road issue indication of the method according to the first exemplary aspect may further comprise, in some embodiments, a route issue outcome indicating if the route issue:
i) was overcome or,
ii) led to a route completion failure.

The method according to the first exemplary aspect may then comprise further training the ML model to associate the at least one map object with the route issue outcome.

In some embodiments of the method according to the first exemplary aspect, the at least one map object may comprise at least one respective map object attribute associated with a physical characteristic of the at least one map object. The method according to the first aspect may then further comprise classifying the map object based on the respective map object attribute.

In some embodiments of the method according to the first exemplary aspect, the method may further comprise obtaining, from the logistics robot, an energy consumption value associated with the route issue indication, wherein the energy consumption value indicates an amount of energy required by the logistics robot to overcome the route issue and, further training the ML model to associate the at least map object with the energy consumption value.

In some embodiments of the method according to the first exemplary aspect, the method may further comprise obtaining a dynamic condition information associated with the route issue location, wherein the dynamic condition information comprises at least one of a weather condition, a mobility density condition, a hazard condition, a path accessibility condition, or a combination thereof and, training the ML model to associate the at least one map object with the dynamic condition information.

In some embodiments of the method according to the first exemplary aspect, the method may further comprise determining a logistics robot type, the logistics robot type comprising at least one of: a wheeled-type robot, legged-type robot, a humanoid-type robot, or a specific robot model and, training the ML model to associate the logistics robot type with the map object.

According to a second exemplary aspect, a computer-implemented method for routing a logistics robot is provided, the method comprising:
- obtaining a route for a logistics robot, wherein the route comprises a start location, and a destination location, wherein the route traverses, at least in part, a mapped public environment;
- retrieving, from a map database, at least one map object located on or adjacent to the route;
- determining for a first logistics robot type, using a machine learning (ML) model trained by associating map objects to route issue indications, a first route issue indication likelihood associated with at least one map object, wherein the ML model has been trained at least for the first logistics robot type;
- calculating, based on the first route issue indication likelihood, a first route penalty value for a portion of the route where the map object is located on or adjacent to; and,
- updating the route based on the calculated first route penalty value.

In some embodiments according to the second exemplary aspect, the obtained route is calculated based on a pedestrian route adjacent, at least in part, to a road link of the mapped public environment. Optionally, the obtained route may be further calculated based on a dynamic condition information of the pedestrian route or the adjacent road link. The dynamic condition information may comprise at least one of a weather condition, a traffic condition, a mobility density condition, a hazard condition, a path accessibility condition, or a combination thereof.

In some embodiments according to the second exemplary aspect, the method may further comprise determining for a second logistics robot type, using the ML model, a second route issue indication likelihood corresponding to the at least one map object, wherein the ML model has been further trained for the second logistics robot type, calculating, based on the second route issue indication likelihood, a second route penalty value for the portion of the route where the map object is located on or adjacent to, comparing the first and second penalty values, and, providing an indication to select a logistics robot type based on the comparison.

In some embodiments in accordance with the second exemplary aspect, the ML model may be further trained based on at least one of:
1) energy consumption values, wherein the energy consumption values may indicate an amount of energy required by the logistics robot to overcome respective route issues,
2) dynamic condition information associated with route issue locations, wherein the dynamic condition information may comprise at least one of a weather condition, a mobility density condition, a hazard condition, a path accessibility condition, or a combination thereof, and,
3) route issue outcomes, wherein the route issue outcomes may indicate whether respective route issue conditions were i) overcome or ii) led to a route completion failure.

In some embodiments according to the second exemplary aspect, the first or second logistics robot types may comprise at least one of: a wheeled-type robot, legged-type robot, a humanoid-type robot, or a specific robot model.

In some embodiments according to the second exemplary aspect, the method may further comprise updating the route to include a handover location in response to the first route issue indication likelihood being over a predetermined handover threshold. The handover location may be prior along the route to the map object.

According to each of the first and second exemplary aspect of the invention, an apparatus is disclosed, configured to perform and/or control or comprising respective means for performing and/or controlling the method according to the respective exemplary aspect of the present invention.

Generally, the means of the respective apparatus of any aspect can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

More specifically, according to each of the first and second exemplary aspect of the invention, a respective apparatus is disclosed, comprising at least one processor and at least one memory including computer program code, the at least one memory and the computer program code configured to, with the at least one processor, cause an apparatus at least to perform and/or to control the method according to the respective exemplary aspect of the present invention.

The apparatus may be at least one server performing the method according to the first and/or second exemplary aspects. The server may for instance be or comprise a server of a map provider or distributor. The at least one server may also be realized by multiple servers or a distributed architecture and may for instance be or comprise a distributed server, a network edge server, or a cloud server. The server may also comprise a database (e.g. a map database) or be in communication with an (e.g. external) database or a database server. As will be explained in more detail below, a part of the server may for instance be a software and/or hardware component thereof, such as a functional component, a server component, module, a circuitry, a chip, a microprocessor or the like.

In some embodiments, the method according to the first and/or second exemplary aspects, the method may be performed locally on a mobile device, such as a logistics robot. In such embodiments, the above-disclosed apparatus may be a module or a component of the mobile device, for example a chip. The disclosed apparatus according to any aspect of the invention may comprise only the disclosed components, for instance processor, memory, or may further comprise one or more additional components. For example, the apparatus may be a "System-on-a-Chip" or SoC, comprising the aforementioned components. The apparatus may also be implemented such that the, the processor, memory or one or more additional components are shared by other functions of the mobile device.

The server or mobile device performing the method of the first exemplary aspect and the at least one server or mobile device performing the method of the second exemplary aspect may work together to perform embodiments of the methods of the first and/or second exemplary aspects. As an example, a server performing the method of the first exemplary aspect may provide a trained ML model to a server performing the method of the second exemplary aspect for routing a logistics robot.

According to each of the first and second exemplary aspects, a computer program product is also provided. The computer program product comprises instructions which, when the program is executed by a computer, cause the computer to carry out any computer-implemented method disclosed herein.

In some embodiments, the computer program product may be stored on computer-readable storage medium, in particular a tangible and/or non-transitory medium. The computer readable storage medium could for example be a disk or a memory or the like. The computer program product could be stored in the computer readable storage medium in the form of instructions encoding the computer-readable storage medium. The computer readable storage medium may be intended for taking part in the operation of a device, like an internal or external memory module, for instance a Read-Only Memory (ROM) or hard disk of a computer, or be intended for distribution of the program, like an optical disc.

The features and example embodiments described above may equally pertain to the different aspects.

It is to be understood that the presentation in this section is merely by way of examples and non-limiting.

Other features will become apparent from the following detailed description considered in conjunction with the accompanying drawings. It is to be understood, however, that the drawings are designed solely for purposes of illustration and not as a definition of the limits, for which reference should be made to the appended claims. It should be further understood that the drawings are not drawn to scale and that they are merely intended to conceptually illustrate the structures and procedures described herein.

### BRIEF DESCRIPTION OF THE FIGURES

The embodiments of the invention are illustrated by way of example, and not by way of limitation, in the figures of the accompanying drawings:
**Fig. 1** shows a diagram of a system arrangement in accordance with some example embodiments.
**Fig. 2** shows an exemplary embodiment of an apparatus in accordance with some example embodiments.
**Fig. 3a** shows a Machine Learning (ML) model training component in accordance with some example embodiments.
**Fig. 3b** shows a Logistics Robot routing engine in accordance with some example embodiments.
**Fig. 4a****-b** shows exemplary route issue scenarios in accordance with some example embodiments.
**Fig. 5** shows an exemplary logistics robot deployment scenario in accordance with some example embodiments.
**Fig. 6** shows a flow diagram of a method in accordance with an embodiment of the first exemplary aspect.
**Fig. 7** shows a flow diagram of a method in accordance with an embodiment of the second exemplary aspect.
**Fig. 8** shows examples of data storage hardware in accordance with some example embodiments.
**Fig. 9 a-d** shows examples of different logistics robot types / models.

### DETAILED DESCRIPTION OF SOME EXAMPLE EMBODIMENTS

The following description shall be understood to complement and be read together with the description as provided in the above summary section of this description. Examples of a method, apparatus, and computer program for logistics robot deployment are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

In logistics operations, the ever-increasing number of shipments poses new challenges for the different participants involved. Automatization has become a primary tool in facilitating many sections of any given logistics journey. In closed locations, such as in warehouses, fulfilment centers, logistics hubs, etc., the use of logistics robots that can pick up, transport, and drop off objects brings enormous efficiency gains to the operations. Implementing such robotic aids is simplified as the operations occur within a controlled environment, where the infrastructure is traversable. For example, surfaces on top of which a logistics robot moves can be leveled, orientation markers can be applied to fixed structures, high-precision positioning systems using specialized hardware (e.g. infrared or radio beacons) can be installed, and similar measures can be taken to ensure problem-free logistics robot operation. In addition, interaction with human beings in such controlled environments is also simplified. Personnel in such environments are usually trained to at least not hinder, but also to collaborate with and even assist logistics robots in their tasks. Given that such facilities are work environments, cooperation, and good-faith, a certain "camaraderie" can be expected in human/logistics robot interactions.

A logistics journey is, however, not exclusively limited to such safe and controlled environments. Some sections of such logistics journeys take place in public environments. As an example, in a pick-up or collection scenario, the "first mile" portion, i.e. from the location where a package is collected to a (first) logistics station where the package is handover for further transport, the package may need to be transported through a public environment involving roads, sidewalks, plazas, parks, bridges, tunnels, etc. A similar example is the delivery or drop-off scenario, where the "last mile" portion similarly involves the transport of a package from a (last) logistics station to the delivery (usually customer) address. Some logistics journeys also occur primarily in the public environment, such as door-to-door delivery, as it is the usual case for curriers, restaurant deliveries and similar services. Not only are these public environments not under the control of logistics operators, but also shared with the general public, which is not expected to assist the logistics robot and may even be a source of risk (e.g. obstructions, vandalism, etc.). In addition, with the portion of the journey being mostly outdoors, the logistics robot will be exposed to prevailing weather conditions.

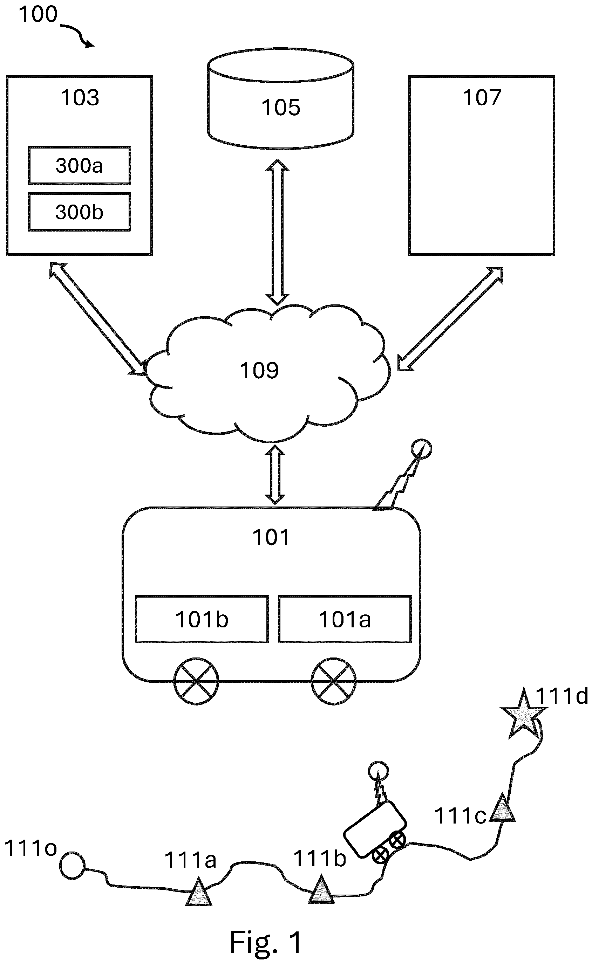

As mentioned above, deployment of logistics robots also depends on infrastructure that can be successfully traversed. It is evident that measures such as leveling surfaces, applying markers and installing high-precision positioning systems in public environments such as towns, cities, or rural areas, are not feasible for logistics operators. To overcome such challenges, logistics robots (such as e.g. logistics robot 101 of Fig. 1) have evolved significantly. Logistic robots are equipped with processing and sensing resources, such as processor(s), memory, communication interface(s), sensor(s), and the like, akin to apparatuses described in connection with some example embodiments. These resources enable logistics robots to monitor their own state (e.g. current location, speed, heading, energy consumption, state of charge (SoC), operating temperature, movement restrictions, etc.), monitor their surrounding environment (detect e.g. obstacles, free paths, moving objects, ambient temperature, humidity, lighting/luminosity, path surface state, etc.), but also to manage their logistics mission (e.g. follow a provided route, deviate from provided route if required, rejoin provided route, pause route traversal, resume route traversal, abort traversal of the provided route, return to origin, complete tasks at points of the provided route, etc.). Not only have logistics robots been equipped with ever-more capable drivetrains, better sensor components (e.g. camera-based, LiDAR, RADAR, ultrasonic, infrared, etc.), improved positioning mechanisms (e.g. GNSS, Wi-Fi, Bluetooth, Ultra-Wide-Band positioning, Visual Positioning Systems, Inertial Measurement Units, etc.), but also new and improved strategies (e.g. Simultaneous Positioning and Mapping SLAM, Computer-Vision based object recognition, etc.) are being applied to improve performance of logistic robots in the real world.

Nowadays the sanitized conditions of a controlled environment are not a prerequisite for operation and different types of logistics robots are available. This increased differentiation does not necessarily mean that there is now a "perfect" robot for all logistics applications, but rather that the different logistics robots have their respective strengths and weaknesses.

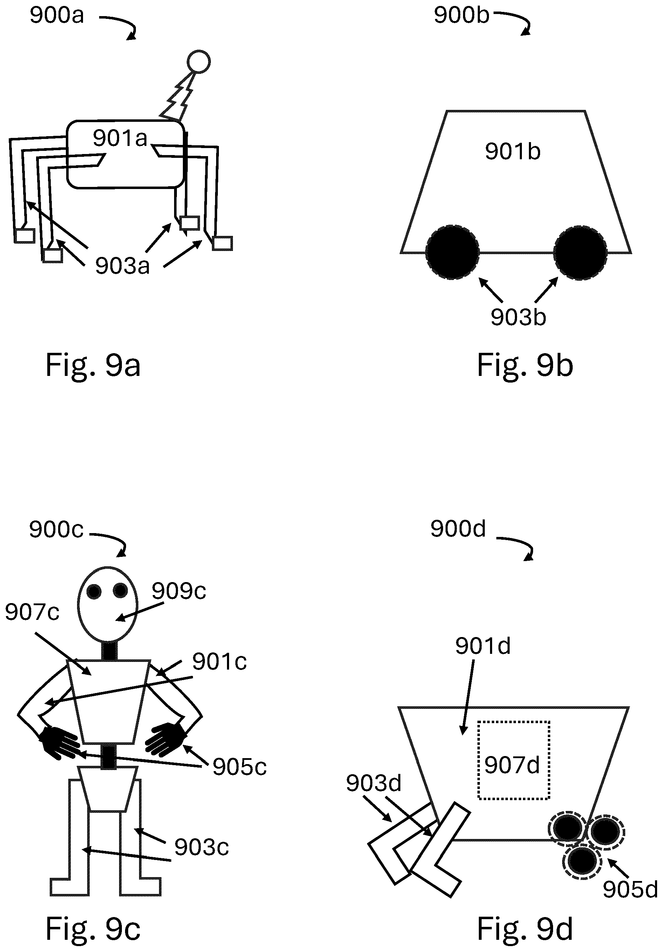

Multiple examples of logistics robots are provided, as illustrated on Fig 9a-d. One example of a logistics robot is the legged-type robot, as exemplary depicted in Fig 9a as logistics robot 900a. The legged-type robot, usually modelled after a quadruped animal, is a versatile and agile robot designed for package delivery. With its four legs 903a (although other legged robots may be configured with 2 or more legs), it can navigate through tight spaces and uneven terrain with ease, allowing it to reach destinations that may be difficult or impossible for traditional wheeled robots. Its advanced leg mechanisms also enable it to climb stairs, traverse rough surfaces, and even carry packages up and down inclines, for example, on top or inside its body 901a. However, this unique design comes with some drawbacks in the context of logistics. For instance, the robot's legs may be more prone to damage from obstacles on uneven terrain, which can lead to costly repairs or even render the robot temporarily unusable. Additionally, the robot's range of operation may be significantly lower as leg movement may require complex motor arrangements and heavier batteries, which in turn lowers the available payload or shortens deployment range.

As another example of a logistics robot, the wheeled robot is provided. One example of a wheeled robot is depicted as wheeled robot 900b on Fig. 9b. A wheeled robot is a reliable and efficient package delivery robot designed for navigating smooth and paved paths. Configurations of wheeled robots may include models with one or two wheels (aided with e.g. gyroscopic stabilization) or other stable 3 or more wheel set-ups. In the example of Fig 9b, a four wheel logistics robot is provided. With its four wheels 903b (side view depicts only wheels on one side) and advanced suspension system, it can move quickly and smoothly over long distances while maintaining stability and control. Payload may be carried, for example, on top or inside its body 901b. In addition, a wheeled design lowers energy requirements (as compared to e.g. a legged robot), allowing for smaller batteries and/or higher payloads. Its compact design also allows it to fit through standard doorways and navigate tight spaces, making it ideal for delivering packages in urban environments. However, the wheeled robot's reliance on smooth surfaces can be a limitation in certain logistics scenarios. For example, if a package needs to be delivered to a rural or off-road location, the wheeled robot may not be able to reach that destination (or a wheeled robot with off-road wheels is required). Stairs may equally present challenges which may require different wheel sizes to overcome.

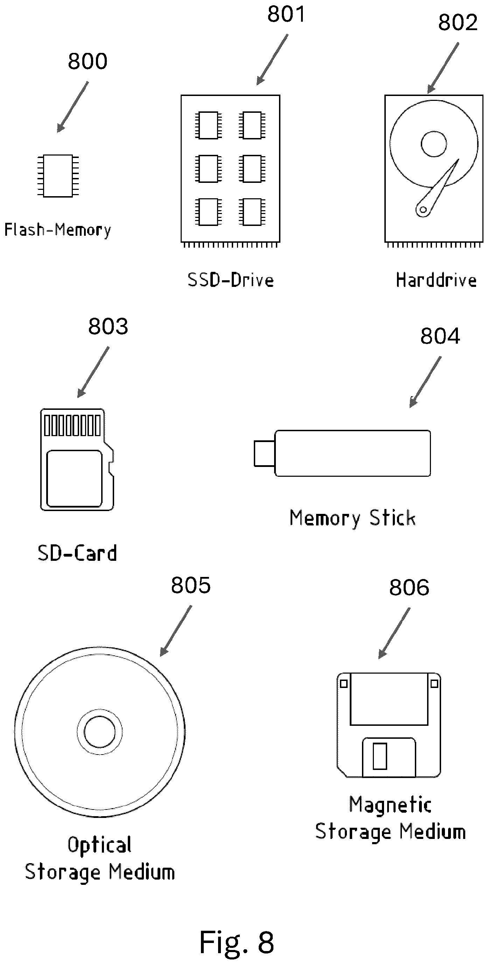

A further example of a logistics robot is the humanoid robot, an example of which is depicted on Fig 8c. A humanoid robot is a package delivery robot designed to interact with humans in a natural way. While also having legs (and thus potentially being thought of as a 2-legged robot), a humanoid robot may in addition be able to stand and walk upright on two legs, such as legs 903c, and, like a human, it has a torso (e.g. torso 907c) that can carry packages of various sizes and shapes, and arms capable of holding the packages, for example, arms 901c. Some examples of humanoid robots may have advanced arms and hands (e.g. hands 905c) enable it to perform complex tasks such as opening doors, handling fragile items, and even interacting with customers through gestures and facial expressions, which can be expressed e.g. via face 909c. Its humanoid design also allows it to navigate stairs and escalators, making it ideal for delivering packages in office buildings and residential areas. For example, reading notes left for delivery personnel with instructions on how to enter may be possible for a humanoid robot (because these e.g. may be left at "human eye height"). However, humanoid nature can be a double-edged sword. While its human-like appearance may be comforting or even enjoyable for some customers, it can also make it more susceptible to vandalism or theft, or cause unfavorable reactions among the general public (e.g. fear, awkwardness, irritability, etc.). Additionally, the robot's advanced features and complex movements may require more maintenance, additional operating energy and upkeep compared to simpler robots, which could increase logistics costs.

Logistics robots may also come in a variety of specific configurations. While there may be a wheeled robot designed for speed and maneuverability around corners, another wheeled robot may be designed for obstacle clearance, another for payload (e.g. weight /and or volume). Other types of logistics robots, e.g. with mixes of legs and wheels, with tracks/chain drive, "Tri-Star" wheel assemblies, snake-like movement configuration, etc. are also conceivable. An example of a logistics robot model is provided in Fig. 9d, as a side view of logistics robot 900d. The mixed-type logistics robot example comprises a body 901d, on top of inside of which a payload can be carried, legs 903d and a "Tri-Star" wheel assembly 905d. Such a logistics robot may for example excel at climbing rough terrain. Some logistic robot models may be specifically suited to maintain payload temperature or minimize vibrations to protect a payload, for example using an isolated compartment such as 907d. Other types of logistics robots may be designed to improve acceptance with members of the public. Different combinations of sensors and environment-awareness capabilities may also be attributed to different logistics robot types. The visibility of the logistics robot, e.g. as a consequence of its physical dimensions, may be also utilized to differentiate among logistics robot types. Given the large variety of possible configurations, it is also advantageous to consider a logistics robot of a specific model as a logistics robot type on its own. In training a ML learning model, it may be considered advantageous to utilize the aforementioned properties to better differentiate between the respective capabilities of the logistics robot types.

It is apparent, at least due to their different configurations, that different logistic robot types will navigate a route with different levels of success. While encountering different objects on or adjacent to the route, one logistics robot type may overcome an obstacle with more ease than a different logistics robot type. In accordance with aspects of the present disclosure, it is considered advantageous to learn which such objects represent significant issues for a given logistics robot type. Such issues may then be considered prior to deploying the logistics robot, aiding in finding a solution before an actual problem arises.

Attention is now turned to Fig. 1, depicting a system arrangement 100, comprising a logistics robot 101, a logistics platform 103, a map database 105, and a Location-Based Services (LBS) Platform 107. The aforementioned components are interconnected via a communications network 109. The logistics platform 103 is further depicted comprising a machine learning (ML) model training component 300a and a logistics robot routing engine 300b. Alternative configurations are envisioned, for example, the map database 105 being implemented within any of the logistics robot 101, the logistics platform 103 or the LBS Platform 107. In an alternative configuration, the model training component 300a and logistics robot routing engine 300b may be implemented as part of the LBS Platform 107 or as components of the logistics robot 101. In a yet further alternative embodiment, the services provided by the LBS Platform 107 (e.g. weather condition information, mobility density condition information, traffic information, hazard condition information, a path accessibility condition information, or the like) may be provided by other (not depicted) services via the communications network 109. The system arrangement of Fig. 1 may be implemented utilizing components described in connection with previously mentioned apparatuses.

Fig. 1 further depicts a simplified route 111, starting at an origin 111o and ending at a destination 111d, further depicting possible route issue locations 111a, 111b and 111c. The route 111 may be traversed by the logistics robot 101. The logistics robot 101 may comprise at least one sensor 101a and a route issue reporting component 101b, as well as components described in connection with apparatuses of some example embodiments or may even contain the apparatus itself. In operation, a logistics robot 101 may, for example, encounter a route issue at location 111c. A route issue indication may then be sent by the logistics robot 101 over the communication network 109 to the logistics platform 103.

The route 111 may be provided to a logistics robot. The route 111 may be planned or calculated in advance by a routing engine, such as logistics robot routing engine 300b. A routing engine may calculate the route 111 based on map objects obtained from a map database, such as map database 105. The map database 105 may be considered a comprehensive collection of geospatial data that captures the intricate details of objects in geographic space, covering a road network(s), structures, open areas, natural features and the like. Geospatial data describing such objects is referred herein as map object(s). In some embodiments, the map database corresponds to a mapped public environment, e.g. areas shared by the general public which have been mapped. Different cartography-related companies, geographical institutions and community-driven projects have already mapped multiple areas of the globe to which the public has unrestricted access. Methods for mapping the public environment may include, for example, driving specialized vehicles collecting image/sensor data on the public road network, collecting information on different objects within reach of the vehicle's cameras/sensors, surveying an area using e.g. theodolites, collecting sensor data from fleets of vehicles, or crowdsourcing mapping information from a community of users, to name a few examples. The map database 105 may be configured to store map objects of different kinds, such as Highways, Local Roads, Streets, Intersections, Junctions, Roundabouts, Pedestrian Paths, Bike Lanes, Traffic Signals, Railway Tracks, Airports, Ports, Public Transportation Hubs, Parking Areas, Land Use Zoning and the like. For different map objects, map object attributes may be stored in the map database 105, providing further information associated with the map object, for example physical characteristics of the map object, such as dimensions, material, condition, etc. Map attributes further allow for classification / differentiation between map objects of a given type. For example, a road curb at a location may be 10cm high at some locations, while being 18cm at a different location, potentially allowing to discern if e.g. a wheeled robot will be able to climb over a specific curb. Other physical characteristics (height, length, width, slope/inclination, weight, rigidity, material, etc.) may be stored as map object attributes. Other map object attributes may further detail the physical condition of some objects, for example road markings, object markings, surface roughness, dents, holes, pores, etc., which may also cause route issues. The road network may be modeled as a graph in a map database, where the nodes represent intersections of roads and edges represent roads. In general, highways, local roads, streets, alleys, paths, etc. may be referred to as road links, as e.g. modeled in map database 105.

Due to their reduced size and lower speeds, logistics robots tend to utilize paths intended for pedestrian use instead of the vehicular road network. A routing engine, such as logistics robot routing engine 300b, may therefore calculate a route for logistics robots using similar constraints to those utilized for pedestrian routing. The logistics robot routing engine 300b may therefore consider map objects associated with pedestrian paths, such as Crosswalks, Pedestrian Bridges, Stairways, Accessibility Ramps, Elevated Walkways, Bicycle Barriers, Pedestrian Barriers, Vegetation (and surrounding bed) and the like. Nevertheless, the pedestrian-based route calculated for the logistics robot may still, at least in part, be adjacent to at least one road link of the mapped public environment, for example when the route involves a sidewalk of a road link. Vehicular traffic on that road link may be a factor to be considered, as it may cause e.g. visibility issues for the logistics robot, result in vehicles constantly going over the sidewalk to e.g. enter/exit parking infrastructure, or, in contrast, influence a lower pedestrian traffic on the sidewalk due to a very congested adjacent road link. More complex route portions may for example occur at locations where the route crosses a road link of the road network.

Logistics robot routing engine 300b may in addition consider dynamic condition information pertaining to the pedestrian route or to the adjacent road link. The dynamic condition information may comprise at least one of a weather condition, a traffic condition, a mobility density condition, a hazard condition, a path accessibility condition, or a combination thereof. As alluded before, the dynamic condition information may be obtained from a Location-Based Services platform 107 or any equivalent service. As examples, the logistics robot routing engine 300b obtains weather data indicating that temperatures for at least a portion of the route is lower than -5°C, traffic data indicating on a road link adjacent to the route is free-flowing, data indicating that the amount of pedestrians (mobility density condition) in the area is low, data indicating that no accidents are reported (hazard condition), or data indicating gates are open during business hours (path accessibility condition). With this information, the routing engine may provide a route that avoids potentially iced surfaces, that uses sidewalks on a road link without traffic jams, that avoids crowds, that will not interfere with emergency services, or that allows for shortcuts at different times of day. The examples are non-limiting, and it should be apparent that not all above-mentioned dynamic conditions need to be considered for every route calculation.

Considering the different map objects and dynamic condition information, the logistics robot routing engine 300b may then output a path from the origin 111o to the destination 111d for the logistics robot to traverse. The route may be structured as a sequence of edges/vectors and nodes/waypoints for the logistics robot to traverse. The nodes/waypoints may be defined at least in part by their coordinates (lat, Ion, for example under the WGS-84 standard), and the edges/vectors may be defined based on a heading (e.g. in degrees relative to North) and a length (e.g. in meters). The route may also be defined under any other different scheme, for example a sequence of road links to follow e.g. adjacent to the road network. The examples for route descriptions are illustrative only and are not limiting. Ancillary information to the route 111 may also be provided to the logistics robot 101, such as map objects along the route 111, dynamic conditions along the route 111, expected time to traverse the route 111 (or expected time to traverse portions thereof, for example up to a given waypoint), expected energy consumption for the route 111 (or expected energy consumption to traverse portions thereof, for example up to a given waypoint), and the like.

Once receiving the route 111, the logistics robot 101 may commence to traverse the route. While following the provided route, the logistics robot 101 may encounter a route issue. Route issues may cause a robot to fail to traverse the provided route 111 as expected. Route issues may be caused by a variety of factors. For example, logistics robots may encounter obstacles like potholes, road debris, or construction zones that could impede their movement. Similarly, logistics robots may struggle to navigate curbs, stairs, water drains, ramps or uneven terrain that may usually not represent an inconvenience to human pedestrians. This may also be the case for objects like benches, plants, fences, or construction equipment (cones, barriers, debris, etc.). In addition, dynamic conditions such as weather conditions, like heavy rain, snow, or fog can reduce visibility, reduce the robot's traction/grip/footing, and generally impede progress. Hazard conditions, like accident locations, slippery path sections, potholes, deteriorated pavement/walkway surface condition, open manhole covers, open construction pits, debris, etc. can similarly impede a robot's traversal of a route, representing further road issues. Further, logistics robots must be able to interact safely with human pedestrians, vehicles, and other road users. For example, larger pedestrian or vehicular traffic volumes may interfere with the logistics robot's ability to complete the provided route as expected. It should be apparent that these are non-limiting examples of route issues and that similar instances and that combinations of similar objects and conditions may represent further examples of causes for route issues. A cause or combination of causes would then correspond to the route issue, by virtue of being either at the same location or adjacent to the route by a predetermined distance, such as a radius of e.g. 1m, 3m, 5m, 7m, 10m, 15m, 20m, 30m or similar. The predetermined distance may be chosen to account for positioning error, but also to determine a correspondence between a cause (e.g. map objects, dynamic conditions, etc.) and the route issue.

As it can be understood from the above, a route issue may comprise causing the logistics robot to fail to traverse the provided route as expected. Conversely, a logistics robot may encounter such a cause (or combination of causes) for a route issue and still be able to traverse the route as expected. A logistics robot may, for example according to its respective capabilities, adapt the path indicated by the provided route to circumvent an object, alter the height/gait of its legs (e.g. for stepping over an obstruction), increase the torque of its wheels (e.g. for rolling over an obstruction, such as for climbing a curb onto a sidewalk), pause along the route (e.g. to allow for a pedestrian, an animal or any other dynamic object to pass through), and take other similar measures while traversing the route. Examples such as these causes for route issues may fall within the normal operational scenarios of a logistics robot (notably, dependent on the robot's type or configuration) and not represent actual route issues. Traversing a route as expected may involve that, overcoming a cause of a potential route issue represents either i) a time delay, ii) an increased distance, or iii) an energy consumption value remaining below a predefined threshold for a given logistics robot type.

A logistics robot may also encounter the aforementioned or similar causes for route issues while traversing the provided route that result in either i) a time delay, ii) an increased distance, or iii) an energy consumption value over a predefined threshold. For example, a logistics robot may utilize e.g. 37 additional seconds to navigate around an obstacle on the route in comparison to what was expected according to the route. In another example, the logistics robot may need to e.g. change sidewalks to avoid an obstruction, adding 15 meters to the route in comparison to the provided route. In yet another example, a logistics robot may have to e.g. utilize an additional 4 Watt for climbing over an obstruction. Exceeding corresponding thresholds (for the preceding examples respectively, e.g. 5 seconds, 5 meters, 0,5 Watt) may trigger the logistics robot to provide a route issue indication. For example, logistics robot 101 may provide the route issue indication via the route issue reporting component 101b. Equivalently, in some embodiments, remote telemetry of the logistics robot (e.g. performed by the logistics platform 103) may determine that a threshold value has been similarly exceeded. Consequently, a route issue indication may be communicated by (or on behalf of) the logistics robot. The logistics robot being equipped with location sensors, such as the sensor(s) 101a of the logistics robot 101, may also attach a corresponding route issue location (e.g. coordinates in lat, Ion). The route issue location may correspond to the point in the route where the i) time delay, ii) increased distance, or iii) increased energy consumption value started to occur. Optionally a timestamp may be attached to the route issue indication, as well as the values for i) time delay, ii) increased distance, or iii) energy consumption.

Optionally, in some embodiments, the route issue indication may further comprise a route issue outcome indication. Some route issues encountered be the logistics robot may be overcome, for example by deviating from the provided route, pausing during traversal of the provided route, climbing/descending, circumventing etc. over/into/around an obstruction and similar actions. In such cases the route issue indication may include a route issue outcome indicating that the issue was overcome. However, some route issues may not be overcome at all within an allotted i) time, ii) allotted distance, or iii) allotted energy consumption value, forcing the logistics robot to return to the route origin, redirect to a safe location (e.g. logistics hub), or request assistance (e.g. from an operator, passing pedestrian, etc.). The allotted i) time, ii) allotted distance, or iii) allotted energy consumption values are in general significantly larger values than the previously mentioned threshold values, and may be set, for example, to ensure that the logistics robot e.g. return to the route origin or to another safe location. Such instances may yield a route issue indication including a route issue outcome signaling a route completion failure. Further, some route issue outcomes may identify damage to the logistics robot 101 arising from route issue (and consequently from encountering a combination of one of the map object, map object attributes and dynamic conditions).

Damage or causes of damage to the logistics robot may include (but not limited to):
- Physical Damage: Collisions with vehicles, walls, objects, or people; falls from elevated surfaces like stairs or ramps; or, damage to internal components or structure due to overloading.
- Environmental Damage: Weather-related, such as from exposure to harsh weather conditions such as rain, snow, heat, or cold; or, damage from dust, sand, and other small particles, or larger debris.
- Cyber Threats and Vandalism: Hacking; damage or defacement by individuals; or, tampering damage due to unauthorized individuals interfering with the robot's packages or the robot itself.
- Wear and Tear: Damage from the general wear and tear from constant use. Software Errors (e.g. bugs and Glitches); or Malfunction due to new bugs or incompatibilities introduced by software updates.
- Electrical and Mechanical Failures: Damage due to excessive use, improper charging, or a faulty battery; wear and tear, or overuse of motors; or malfunction due to sensor failure or inaccurate data.

If, for example, some logistics robot types are less likely to experience damage on a certain route, these may be recommended by the logistics platform 103 to fulfill the logistics route.

Continuing with Fig 1. logistics platform 103 may be utilized to manage logistics robots of different types, such as logistics robot 101. Management of logistics robots may include, not exclusively, calculating and/or generating routes, performing monitoring (e.g. robot location, state of charge, operational state, communicating from/to the robot, etc.), assigning tasks, reporting on logistics operations (e.g. to end-users, other systems, etc.), and the like. The logistics platform 103 may further comprise, as discussed above, logistics robot routing engine 300b, which may be utilized to calculate routes for the logistics robot 101. The logistics platform 103 may access a map database 105 or LBS Platform 107 to obtain information relevant to route planning, including, road infrastructure, pedestrian walkways, stairways, ramps, weather conditions, hazards, (e.g. construction sites, roadwork, accidents, incidents, etc.), traffic volumes, congestion patterns, population densities, foot traffic, opening hours of business, gates, pathways, etc. The logistics robot routing engine 300b may also consider the characteristics of each logistics robot such as type and size of the robot, state of charge (battery level) of the robot, payload capacity and constraints of the robot. In one embodiment, the logistics robot routing engine 300b may use a combination of these factors to generate a route for the logistics robot 101, taking into account the needs and limitations of both the robot and the delivery service.

In addition, the logistics platform 103 may also comprise a machine learning (ML) training component 300a. Assessing which combination of map objects and dynamic conditions may result in route issues for a logistics robot is a significant obstacle for automated logistics, particularly for routes within public space. So that, for example, the logistics robot routing engine 300b can effectively provide optimal logistics robot routes, some example embodiments utilize an ML model(s) to identify which combinations of map objects and dynamic conditions may result in route issues for a given logistics robot.

The ML training component 300a may be enabled to obtain route issue indications from the logistics robot 101, determine the route issue location, query the map database 105 for a map object corresponding to the location. In some embodiments, the ML training component may obtain a route issue outcome associated with the route issue. Optionally in some embodiments, the ML training component 300a may also query the map database for a map object attribute associated with a physical characteristic of the map object and classify the map object based on the respective map object attribute. In some embodiments, the ML training component 300a may also query LBS Platform 107 (or equivalent) for dynamic conditions corresponding to the route issue location. In yet some embodiments, the ML training component 300a may also obtain an energy consumption value associated with the route issue indication. The ML training component 300a trains the ML model to associate the map object with the route issue indication and, optionally, further trains the ML model to associate the map object with the obtained route issue outcome, the dynamic condition information, the energy consumption value, or a combination thereof. In some embodiments, the ML training component 300a may further determine the logistics robot type (e.g. wheeled, legged, humanoid, specific model type, etc.) and further train the ML model to associate the logistics robot type with the map object.

The ML training component 300a may employ suitable models including Bayesian networks, decision trees, random forests, and support vector machines (SVMs). These algorithms can be trained on a dataset consisting of labeled route issues and corresponding map objects and environmental conditions. By leveraging the power of machine learning, these algorithms can learn to identify patterns and relationships between the input features and the probability of a route issue occurring. In particular, Bayesian networks may be well-suited for this task due to their ability to represent complex probabilistic dependencies between variables. Decision trees and random forests, on the other hand, may be effective at handling high-dimensional data and can be used to identify key features that contribute to the likelihood of a route issue indication. SVMs, with their ability to handle non-linear relationships, may also be employed to estimate the probability of route issue based on the input features. Specific applications or implementations may select different models, thereby enabling more differentiated decision-making by the routing platform and reducing the risk of route issues.

The logistics platform 103 may be embodied in a variety of ways, including as a software application running on a server or cloud infrastructure; as a local application or service e.g. on board the logistics robot 101 (for example, with distributed functionality among edge devices or in a fully distributed logistics platform); or as a dedicated hardware unit connected to a network, or by an apparatus as described in connection with aspects of the present disclosure. In each case, the logistics platform 103 may communicate with logistics robots via communication network 109.

Returning to the map database, the map database 105 may include node data, road segment data or link data, point of interest (POI) data, or the like. The map database 105 may also include cartographic data, routing data, and/or maneuvering data. According to some example embodiments, the road segment data records may be links or segments representing roads, streets, or paths, as may be used in calculating a route or recorded route information for determination of one or more personalized routes. The node data may be end-points corresponding to the respective links or segments of road segment data. The road link data and the node data may represent a road network, such as used by vehicles, cars, trucks, buses, motorcycles, and/or other entities. Optionally, the map database 105 may contain path segment and node data records or other data that may represent pedestrian paths or areas in addition to or instead of the vehicle road record data, for example. The road/link segments and nodes can be associated with attributes, such as geographic coordinates, functional class(es), street names, address ranges, speed limits, turn restrictions at intersections, and other navigation related attributes, as well as POIs, such as fueling stations, hotels, restaurants, museums, stadiums, offices, auto repair shops, buildings, building footprints, stores, parks, etc. The map database 105 can include data about the POIs and their respective locations in the POI records. The map database 105 may include data about places, such as cities, towns, or other communities, and other geographic features such as bodies of water, mountain ranges, etc. Such place or feature data can be part of the POI data or can be associated with POIs or POI data records (such as a data point used for displaying or representing a position of e.g. a business, a public office, a venue, a town, a city, etc.). In addition, the map database 105 can include event data (e.g., traffic incidents, construction activities, scheduled events, unscheduled events, etc.) associated with the POI data records or other records of the map database 105.

The map database 105 may be maintained by a content provider e.g., a map developer. By way of example, the map developer can collect geographic data to generate and enhance the map database 105. There can be different ways used by the map developer to collect data. These ways can include obtaining data from other sources, such as municipalities or respective geographic authorities. In addition, the map developer can employ field personnel to travel by vehicle along roads throughout the geographic region to observe features and/or record information about them, for example. Also, remote sensing, such as aerial or satellite photography, can be used to generate map geometries directly or through machine learning.

The map database 105 may be a master map database stored in a format that facilitates updating, maintenance, and development. For example, the master map database or data in the master map database can be modeled in a Map Object Model (MOM) format, such as for development or production purposes. The Oracle spatial format or development/production database can be compiled into a delivery format, such as a geographic data files (GDF), GeoJSON, or NDS format. The data in the production and/or delivery formats can be compiled or further compiled to form geographic database products or databases, which can be used in end user navigation devices or systems. The map database 105 may be queried via a user interface, an API, or the like. A query to the map database 105 may, for example, specify a location in various formats (coordinates, addresses, road link ID, map tile ID, areas, polygons, regions, POI ID, etc.) and may further allow for searching within a distance around a location (e.g. location + search radius in meters, search corridors around a road link or sequence of road links, along a route, within a map tile, or the like).

For example, geographic data may be compiled (such as into a platform specification format (PSF) format) to organize and/or configure the data for performing navigation-related functions and/or services, such as route calculation, route guidance, map display, speed calculation, distance and travel time functions, and other functions, by a mobile device, a logistics platform or a location-based service, such as, respectively, logistics robot 101, logistics platform 103 or LBS Platform 107, for example.

As mentioned before, the LBS Platform 107 may provide further geolocated information. In some embodiments, the map database 105 may be co-located or be made accessible through the LBS Platform 107. Static and dynamic information may be obtained by querying the LBS Platform 107 by providing a location indication (e.g. coordinate pair, road link ID, map tile ID, etc., similar to queries discussed in connection with the map database 105) and optionally an information type and time parameter (e.g. hh:mm, dd/mm/yyyy or similar) via an API. A reply may then contain the available information. The Logistics Platform 103, may, as required by the ML training component 300a or logistics robot routing engine 300b, request information from the LBS platform 107. The disclosed logistics platform 103 may access location-based services to obtain information relevant to route planning and obstacle avoidance. Such location-based services may include, but are not limited to:
- Weather services: providing current and forecasted weather conditions, including temperature, precipitation, wind speed, and other meteorological data;
- Traffic services: providing real-time traffic congestion patterns, road closures, and construction information;
- Hazards services: providing information on hazards such as accidents, roadwork, or natural disasters that may affect navigation;
- Mobility density/ pedestrian traffic services: providing information on pedestrian density, flow rates, and movement patterns to inform route planning and obstacle avoidance;
- Path Accessibility Information: providing information on opening hours, gate or checkpoint locations, and other relevant details for delivery purposes. Path accessibility may also be dictated by regulatory/legal constraints, such as prohibition of autonomous devices for zones and paths within such zones;
- Event calendars: providing information on scheduled events, such as festivals, parades, or road closures that may affect navigation.

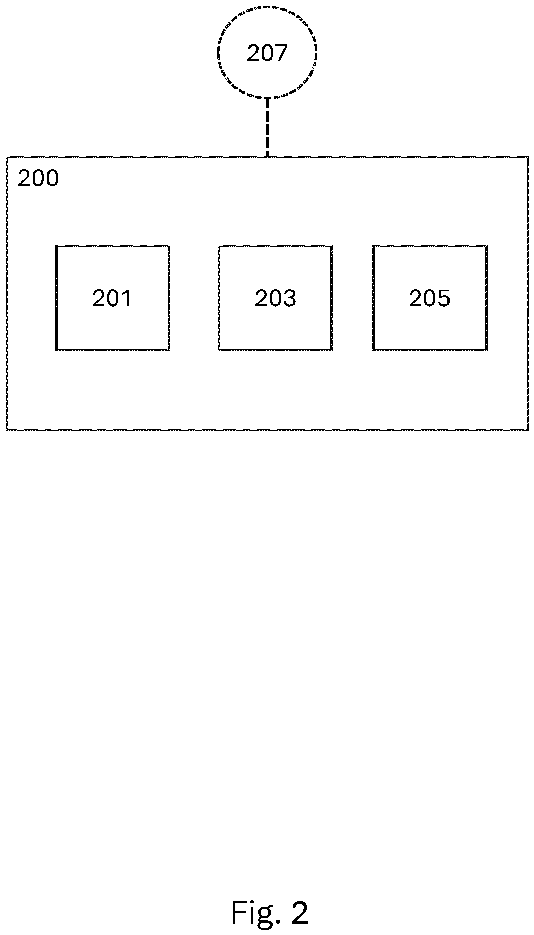

Proceeding with Fig. 2. an example embodiment of a logistics platform 103 as an apparatus is provided. The apparatus, such as that shown in Fig.2, may be specifically configured in accordance with an example embodiment of the present disclosure for performing a method of training a ML training model for logistics robots, in accordance with the first exemplary aspect, or for performing a method for routing a logistics robot, in accordance with the second exemplary aspect. The apparatus may include or otherwise be in communication with a processor 201, a memory device 203, a communication interface 205, and a user interface 207. In some embodiments, the processor (and/or co-processors or any other processing circuitry assisting or otherwise associated with the processor) may be in communication with the memory device via a bus for passing information among components of the apparatus. The memory device may be non-transitory and may include, for example, one or more volatile and/or non-volatile memories. In other words, for example, the memory device may be an electronic storage device (for example, a computer readable storage medium) comprising gates configured to store data (for example, bits) that may be retrievable by a machine (for example, a computing device like the processor 201). The memory device may be configured to store information, data, content, applications, instructions, or the like, for enabling the apparatus to carry out various functions in accordance with an example embodiment of the present invention. For example, the memory device could be configured to buffer input data for processing by the processor. Additionally or alternatively, the memory device could be configured to store instructions for execution by the processor.

The processor 201 may be embodied in a number of different ways. For example, the processor may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally or alternatively, the processor may include one or more processors configured in tandem via the bus to enable independent execution of instructions, pipelining and/or multithreading.

In an example embodiment, the processor 201 may be configured to execute instructions stored in the memory device 203 or otherwise accessible to the processor. Alternatively or additionally, the processor may be configured to execute hard coded functionality. As such, whether configured by hardware or software methods, or by a combination thereof, the processor may represent an entity (for example, physically embodied in circuitry) capable of performing operations according to an embodiment of the present invention while configured accordingly. Thus, for example, when the processor is embodied as an ASIC, FPGA or the like, the processor may be specifically configured hardware for conducting the operations described herein. Alternatively, as another example, when the processor is embodied as an executor of software instructions, the instructions may specifically configure the processor to perform the algorithms and/or operations described herein when the instructions are executed. However, in some cases, the processor may be a processor specific device (for example, a mobile terminal or a fixed computing device) configured to employ an embodiment of the present invention by further configuration of the processor by instructions for performing the algorithms and/or operations described herein. The processor may include, among other things, a clock, an arithmetic logic unit (ALU) and logic gates configured to support operation of the processor.

The apparatus 200 of an example embodiment may also include a communication interface 205 that may be any means such as a device or circuitry embodied in either hardware or a combination of hardware and software that is configured to receive and/or transmit data to/from a communications device in communication with the apparatus, such as to facilitate communications with one or more logistic robot 101 or the like. In this regard, the communication interface may include, for example, an antenna (or multiple antennae) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may alternatively or also support wired communication. As such, for example, the communication interface may include a communication modem and/or other hardware and/or software for supporting communication via cable, digital subscriber line (DSL), universal serial bus (USB) or other mechanisms.

The apparatus 200 may also include a user interface 207 that may in turn be in communication with the processor 201 to provide output to the user and, in some embodiments, to receive an indication of a user input. As such, the user interface may include a display and, in some embodiments, may also include a keyboard, a mouse, a joystick, a touch screen, touch areas, soft keys, one or more microphones, a plurality of speakers, or other input/output mechanisms. In one embodiment, the processor may comprise user interface circuitry configured to control at least some functions of one or more user interface elements such as a display and, in some embodiments, a plurality of speakers, a ringer, one or more microphones and/or the like. The processor and/or user interface circuitry comprising the processor may be configured to control one or more functions of one or more user interface elements through computer program instructions (for example, software and/or firmware) stored on a memory accessible to the processor (for example, memory device 203, and/or the like). Alternatively, or in addition, the user interface 207 may be implemented as a service for other apparatuses or systems, and may be made accessible via communication interface 205, such as a web-page interface, remote desktop/console, or the like.

The apparatus 200 of some embodiments may be integrated with or otherwise onboard the logistics robot 101 whereby the apparatus 200 may be equipped with or in communication with (e.g., via communications interface 205) one or more sensors (not depicted), such as a Global Navigation Satellite System (GNSS) sensor (e.g., GPS, Galileo, GLONASS, etc.), accelerometer, image sensor, LiDAR, radar sensor, ultrasonic sensor, infrared sensor, inertial measurement unit (IMU), gyroscope, magnetic field sensor, etc. Any of the sensors may be used to sense information regarding the location, movement, positioning, or orientation of the apparatus for use in identifying a location of the apparatus 200. In some embodiments, the apparatus 200 may derive information regarding location, movement, position, or orientation of the apparatus 200 based on communication signals perceived by the communications interface 205 such as through signal triangulation or signal fingerprinting, for example. In some embodiments, the apparatus may combine both sensor information and communication signals to derive a location of the apparatus 200.

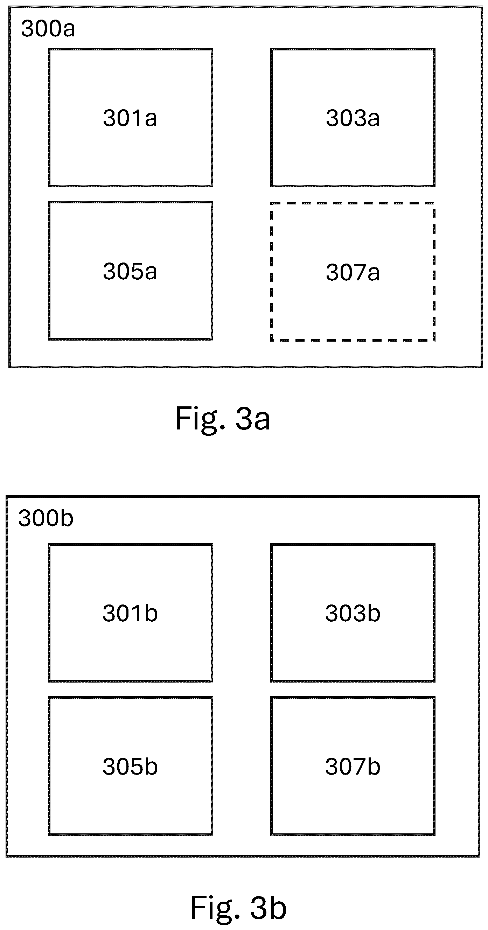

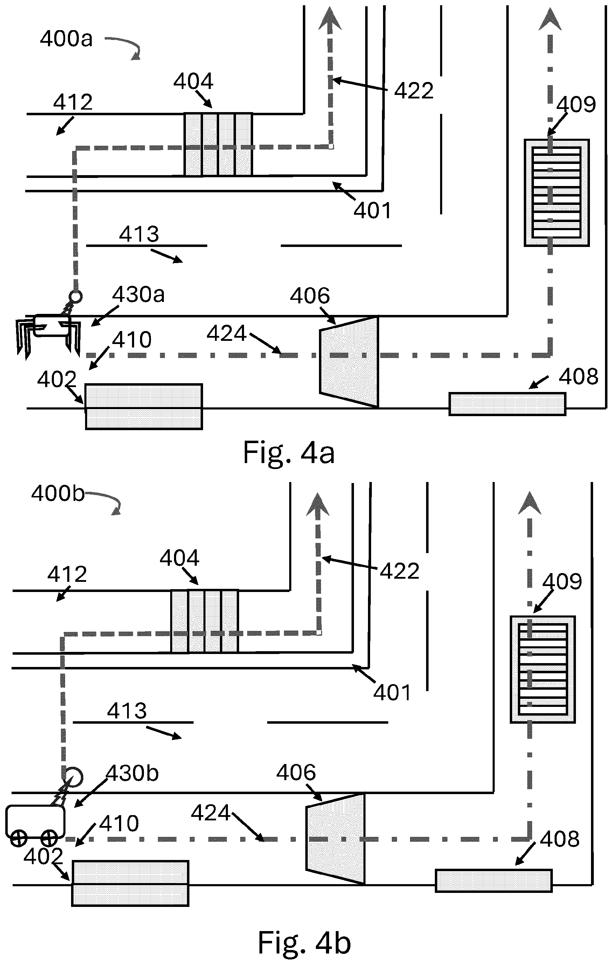

Fig. 3a illustrates an ML training component, here depicted as ML training component 300a. ML training component 300a may further comprise a robot data reception module 301a, a querying module 303a, an ML model module 305a and an (optional) update manager 307a. The above presented modules and components of the ML training component 300a can be implemented in hardware, firmware, software, or a combination thereof. It should be understood that the ML training component 300a may be implemented with equivalent configurations that still fulfill the purpose of the first exemplary aspect. Though depicted as a component of the logistics platform 103 in FIG. 1, it is contemplated that the ML training component 300a may be implemented as a module of any other component or as a stand-alone component of the system 100. In another embodiment, the ML training component 300a and/or the modules 301a-305a may be implemented as a cloud-based service, local service, native application, or combination thereof. The functions of the ML training component 300a, and/or the modules 301a-305a are discussed with respect to Figs. 4-6.

Fig. 3b illustrates a Logistics Robot routing engine, here depicted as Logistics Robot routing engine 300b. Logistics Robot routing engine 300b may further comprise a querying module 301b, a route calculation module 303b, an ML model module 305b and a route penalty calculation module 307b. The above presented modules and components of the Logistics Robot routing engine 300b can be implemented in hardware, firmware, software, or a combination thereof. Though depicted as a component of logistics platform 103 in FIG. 1, it is contemplated that the Logistics Robot routing engine 300b may be implemented as a module of any other component or as a stand-alone component of the system 100. In another embodiment, Logistics Robot routing engine 300b and/or the modules 301b-307b may be implemented as a cloud-based service, local service, native application, or combination thereof. The functions of the Logistics Robot routing engine 300b, and/or the modules 301b-307b are discussed with respect to Figs. 4-7.

Continuing with Fig. 4a, an exemplary logistics robot routing scenario 400a is depicted. In an operational example of the method according to the first exemplary aspect, the route 422 is provided to the legged robot 430a, an example of a logistics robot 101. In traversing the route, the legged robot 430a, steps down from the sidewalk 410, crosses the street 413, steps onto sidewalk 412 over the curb 401, turns right towards the stairway 404, climbs the stairway 404 and proceeds to turn left towards to continue the route (e.g. towards a destination). Under "normal" dynamic conditions (further herein referred to as e.g. no closed barriers, no hazards, regular traffic, regular pedestrian density, dry and mild weather), the legged robot 403a may not provide any route issue indication and may fulfill the route as expected. However, covering the same route 422 under e.g. a heavy traffic condition, may cause a significant delay in crossing the street 413. Similarly, under wet or icy weather conditions, the stairway 404 may cause the legged robot 430a to slip, readjust its gait, regain its balance, attempt to jump over the stairway 404, find a detour (e.g. via street 413), etc. leading to a delay, increased route distance and/or increased energy consumption. In such case, the legged robot 430a may provide a route issue indication, comprising the location of the route issue (here, corresponding to the stairway 404), and optionally, an indication if the route issue was overcome (as a route issue outcome), a time delay, an increased distance, an energy consumption value, or a combination thereof. In case the legged robot 430a was unable to find a solution to overcome the route issue (e.g. within an allotted i) time, ii) an allotted distance, or iii) an allotted energy consumption value) it may also provide an indication of a route completion failure as the route issue outcome.

Similarly, the legged robot 430a may also traverse the route 424. Without leaving the sidewalk 410, it may pass staired entrance 402, go up ramp 406, turn left after entrance 408 (e.g. entrance of a popular café "Coffee Shock"), walk over rain gutter 409 and continue towards route 424's destination. Under "normal" dynamic conditions (as previously exemplified), the legged robot 430a may, for example, traverse the route 424 up to the rain gutter 409. Spacing of the grates may cause the legged robot 430a to slow down, readjust the gait to place each foot on a grate, detour around rain gutter 409, jump over the rain gutter 409, etc. A route issue indication may be provided comprising the location of the route issue (here, corresponding to the rain gutter 409), optionally with similar route issue information as discussed in connection with route 422. Under different dynamic conditions, like slippery surfaces due to weather, notification of construction work relating to rain drainage along street 413, it may happen that the legged robot 430a gets a leg stuck in rain gutter 409 or has a blocked sidewalk 410 that cannot be traversed, leading to a different route issue indication, such as one indicating a route completion failure. A further different scenario may be a rush hour at "Coffee Shock", causing the legged robot 430a to wait an extended period of time at entrance 408 to resume the route, leading to a route issue indication at a location corresponding to route-adjacent entrance 408, with a time delay value and an indication of the route issue being overcome.

Fig. 4b further illustrates another logistics robot routing scenario 400b. For simplifying explanations, the example scenario 400b takes place at the same location of 400a, involving the same potential obstructions of scenario 400a. However, the routes 422 and 424 are provided to be traversed by wheeled robot 430b. While traversing route 422, the wheeled robot 430a may cross the street 413, climb the curb 401 onto sidewalk 412 and reach the stairway 404. The robot may not be able to climb the stairway 404. Depending on dynamic conditions (e.g. no/low traffic on street 413, clear day with good visibility, information about closed street 413, etc.), the wheel robot may descend onto the street 413, continue alongside the sidewalk 412 and climb curb 401 after the stairway 404 to continue on route. In such case, the wheeled robot 430b may provide a route issue indication, comprising the location of the route issue (here, corresponding to the stairway 404), and optionally, an indication if the route issue was overcome (as a route issue outcome), a time delay, an increased distance, an energy consumption value, or a combination thereof. If however, the wheeled robot 430b is unable to pass the stairway 404, the wheeled robot may issue a route issue indication, such as one indicating the location of the route issue and optionally a route completion failure indication. As an example of a specific logistics robot model, a wheeled robot with a Tri-Star wheel configuration may be able to overcome the stairway 404 and would not report any route issue indication for route 422, as e.g. climbing stairs would be within normal operation of that specific logistics robot.

In case the wheeled robot 430b would traverse route 424, the wheeled robot 430b may continue on sidewalk 410 past staired entrance 402, continue up ramp 406, make a left turn after Coffee Shock's entrance 408 and continue over rain gutter 409, without any issue under "normal" dynamic conditions. A further different scenario may involve a rush hour at "Coffee Shock" entrance 408, causing the wheeled robot 430b to wait an extended period of time at entrance 408 to resume the route, leading to a route issue indication at a location corresponding to entrance 408, with a time delay value and an indication of the route issue being overcome. In yet another scenario, a slippery ramp 406 may cause e.g. more attempts at different speeds or torque settings, yielding e.g. a route issue indication with a location corresponding to ramp 406 and optionally an indication if the route issue was overcome (as a route issue outcome), a time delay, an increased distance, an energy consumption value, or a combination thereof. As another example, again involving the specific logistics robot model type with a Tri-Star wheel arrangement, it may be that rain gutter 409 blocks the Tri-Star arrangement such that the logistics robot is unable to free itself from the grates, leading to a route completion failure route issue outcome (and possibly a request for assistance).

It should be apparent that, given the myriad of possible routes, logistics robots, objects and dynamic conditions, multiple possible scenarios are possible in which example embodiments can be similarly applied. Regardless of the specific scenario, a route issue indication from a logistics robot may be communicated (e.g. via communication network 109) using a suitable data format. A route issue indication can be formatted as a data message, with a payload specifying a location for the route issue indication as perceived by the logistics robot 101. Using onboard location sensors, the logistics robot 101 may determine a coordinate pair location (lat, Ion) for the location where the logistics robot was present when it perceived the issue. Note that the location is not necessarily e.g. an obstruction's location. A logistics robot 101 may convey an estimated location for the object causing the route issue, sensor observation data corresponding to the object causing the route issue, and the like, but this is not required. The coordinate pair is included as the road issue indication's location. Optionally, the route issue indication message may further include a timestamp (which may be implicit, e.g. derived from the message's timestamp), a logistics robot type (which may be implicitly known since the logistics robot is already in communication with the logistics platform 103), a route issue outcome indication, a time delay, an increased distance, an energy consumption value, or a combination thereof.

The ML Training component 300a may be utilized to learn about associations, patterns, combinations, etc. of map objects, route issue outcomes, dynamic conditions, delays, increased distances, increased energy consumption and the like. ML models may be trained using such information as ground truth. In some example embodiments, obtaining or receiving a route issue indication may be performed via the robot data reception module 301a. The robot data reception module 301a may extract the route issue location from the route issue indication and provide it to the querying module 303a.

The querying module 303a may then obtain at least one map object, or a plurality of map objects corresponding to the route issue location from a map database, such as map database 105. The query to the map database 105 may optionally provide a distance around the route issue location (e.g. a radius) to collect map objects stored in the map database, which are either on or adjacent to the route issue location. As an example, the distance around the route issue location may be 1m, 3m, 5m, 7m, 10m, 15m, 20m, 30m or similar, in order to account for positioning error, but also to capture map objects and dynamic conditions around the objects that may affect the route by virtue of being adjacent to the route. The distance may be tuned according to the needs of a specific implementation. As an example, in route 422 of scenario 400b, data pertaining to stairway 404 and curb 401 (because e.g. within radius of route issue) may be obtained. Optionally, the querying module 301a may further obtain an attribute(s) associated with a physical characteristic of the map object. For example, a height of curb 401 (e.g. curbHeight=15cm) and a width of step for stairway 404 (e.g. stepWidth=25cm) are obtained. In another example, a material of the curb 401 (e.g. curbMaterial=concrete) a physical condition of the curb 401 (e.g. curbCondition=intact [or chipped, broken, polished... may be obtained.

The querying module 303a may also obtain information for dynamic conditions from LBS platform 107. Similar to queries to map database 105, the querying module 303a may provide the route issue location, in addition to a time parameter, so that relevant spatiotemporal information can be retrieved. The query may further indicate which type of dynamic condition information is sought.

The obtained map object(s) can then be provided to the ML model module 305a. In addition, map object attributes and dynamic location information can be also provided to the ML model module 305. A logistics robot type, a route issue outcome, a time delay, an increased distance, an energy consumption value data or a combination thereof may be further provided by the robot data reception module 301a to the ML model module. The obtained data tuple can then be formatted as an input vector, suitable for use with the ML model of choice. By providing multiple data tuples, the ML model can be trained to determine the likelihood of a map object causing a route issue indication given a set of logistic robot route context information. The ML model may also provide a likelihood of a route issue being overcome or causing a route completion failure, if it were encountered by a logistics robot of a given type. Further, the ML model may allow for predicting a time delay, an increased distance or an energy consumption value associated with the route issue indication.

The optional update manager 307a may continue to orchestrate collection of route issue indication data, map object data and dynamic condition data to continuously train the ML model via the ML model module 305, and further distribute the ML model to other entities, such as a (either local or remote) Logistics Robot route engine 300b.

As an example, a ML model trained for a single robot type (e.g. wheeled) under input of e.g.:

```
       mapObject=Stairway;
```

may yield:

```
       RouteIssueLikelihood=.87.
```

As a further example, the trained ML module may now, under more detailed input e.g.:

```
       robotType=leggedRobot;
       mapObject=RainGutter;
       rainGutterGratePitch=6cm;
       dynamicConditions={Temp=20°C;Rain=0mm;Wind=5km/h;
        lighting=6000 lumen; traffic=low};
```

may yield:

```
       RouteIssueLikelihood=.78
       timeDelay=20s
       extraDistance=0m
       extraEnergy=0.7W
```

It should be apparent that example embodiments may thus be able to deal with several variations of input data combinations without departing from the disclosed method.

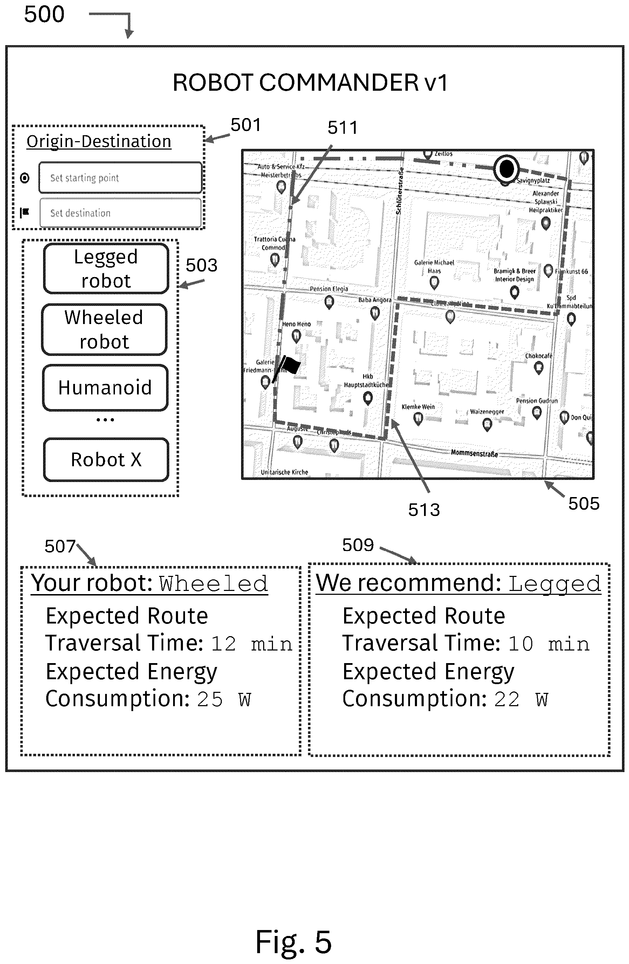

An example Ul interface for a robot management application is depicted in Fig. 5. The Ul interface 500 is provided as an example for interacting with embodiments according to the different aspects disclosed herein. Equivalent interactions can similarly be achieved via e.g. API implementations, without the need for actual visualizations. A route origin and destination field 501 is provided, to simplify descriptions. However, input of multiple origin and destinations are envisioned, for example using matrix routing, tour planning and other commonplace commercial logistics applications. Field 503 allows for logistics robot type selection, map interface 505 allows for visualizing origins/destinations and routes (among other map features), here for example routes 511 and 513, information field 507 displays a route summary for a logistics robot (as requested by e.g. a user) and finally information field 509 displays information associated with an updated route.

Example operation of the Logistics Robot routing engine 300b of Fig. 3b is described in the following. Once the Logistics Robot routing engine 300b obtains an origin and destination, for example via field 501, the querying module 301b may obtain map objects from map database 105 to create a route for a logistics robot, for example by obtaining related/connected objects that build a graph from origin to destination. Querying module 300b may be equivalent to querying module 300a. Route calculation module 303b proceeds to find a path from the origin to destination based on the obtained objects. Routing calculation may be performed using known algorithms (e.g. Dijkstra, A*, etc.). Optionally, the route may be calculated under similar parameters to those used to calculate a pedestrian route. A part or parts of the route may be adjacent to a road link of the mapped public environment. Also, dynamic condition information may be optionally accessed, e.g. from LBS platform 107, to determine dynamic conditions that may prevail during the intended time of traversal of the route, which may be considered by the route calculation module 303b to determine traversal costs of different portions of the route. The Logistics Robot routing engine 503 may also receive a robot type indication from e.g. the user, fleet management application, or similar, indicating which type of robot should be used for the route. Once the route is calculated, querying module 301b may be utilized to obtain map objects located or on adjacent to the calculated route. To this end, the querying module may implement e.g. a corridor search, which may obtain a map object(s) from the map database 105 within a predefined distance (akin to previously discussed distance radius) from the route.

Having obtained at least one map object, the ML model module 305b may be used to query a trained ML model. The ML model module may format the map object, and optionally additional information, in an adequate format or input vector for the ML model to process. The trained ML model may be for example an ML model trained in accordance with the first exemplary aspect of the disclosure. By providing the map object to the ML Model, the ML model then may determine a route issue indication likelihood associated with the map object. In some embodiments, the ML model may be further queried with an additional indication of a logistics robot type, map object attribute(es) of physical characteristics or the map object, prevailing dynamic conditions associated with the map object, or a combination thereof. The determined route issue indication likelihood may then be provided to the route penalty calculation module 307b. The route penalty calculation module 307b may find the portion of the route (e.g. road segment or link corresponding to the route edge / route vector) where the map object is located on or adjacent to, and calculate a penalty value based on the route issue indication likelihood. The penalty value may represent an increased traversal cost for the portion of the route in question. A conversion between route issue indication likelihood and penalty value may be established based on a rule set, e.g:

```
 if routeIssueLikelihood > .7 && routeIssueOutcome==overcome -> +30sec;
 if routeIssueLikelihood > .5 && routeIssueOutcome==failedRoute -> +30000sec;
 if routeIssueLikelihood <.7 && routeIssueOutcome==overcome -> +20sec;
```

Other penalty definitions may be defined as well, for instance values in meters, energy, or unit-less numbers may be utilized according to the requirements of the routing engine.

The resulting penalty value may then be provided by the route penalty calculation module 307b to the route calculation module 303b to update the route based on the calculated penalty value. The route may be then provided to a logistics robot such as logistics robot 101 or be displayed on Ul 500 as e.g. route 511. Additional information about the route (e.g. Estimated traversal time, energy use, etc.) may be provided on e.g. field 507 or via an API of the logistics platform 103.

In some embodiments, a route issue indication likelihood may indicate that a potential route issue may not be overcome by the logistics robot. By determining the location associated with the map object yielding a route issue indication likelihood over a threshold (e.g. a handover threshold), the location of the route issue may be designated as a handover location. The handover location may be indicated to be prior along the route to the map object. For example, another logistics robot may be summoned to take over the logistics task, a human operator may be called to complete delivery, or a recipient may be instructed to collect the parcel before the route issue happens or may happen, e.g. at a point on the route prior to the map object location.

In some embodiments, an optimized route may be calculated. For example, a logistics robot type among a plurality of logistics robot types may be recommended for deployment. In cases where the ML has been trained for additional logistics robot types, the ML model module 305b may be queried to provide logistics robot type-respective Route Issue Indication Likelihoods for the map object(s) located on or adjacent to the route. Based on the obtained respective route issue indication likelihoods, the route penalty calculation module 307b may calculate route penalty values for the different portions of the route, respective to each logistics robot type. By comparing the different respective penalty values, an indication to select a specific logistics robot type may be provided. In some examples, a comparison of time delays may indicate that the robot with the lowest expected route traversal time should be utilized, while in other examples, a penalty that minimizes the total route distance may favor selection of a certain logistics robot type. Similar considerations can be made for energy consumption values, or even combinations of the different penalty values. Alternatively, in some embodiments, routes can be calculated for respective logistics robot types and a comparison of total route distances, total estimated route traversal times, total energy consumption values, or combinations thereof can be similarly utilized to provide an indication to select a logistics robot type.

As an example, after comparing penalty values, field 509 may indicate a suggested robot type (here "legged") that can traverse the route 513 in a shorter time span and with lower energy requirements than a wheeled robot on route 511. Such indications may not necessarily be made only over a UI but may be e.g. forwarded to a fleet management application via API for dispatching the robots.

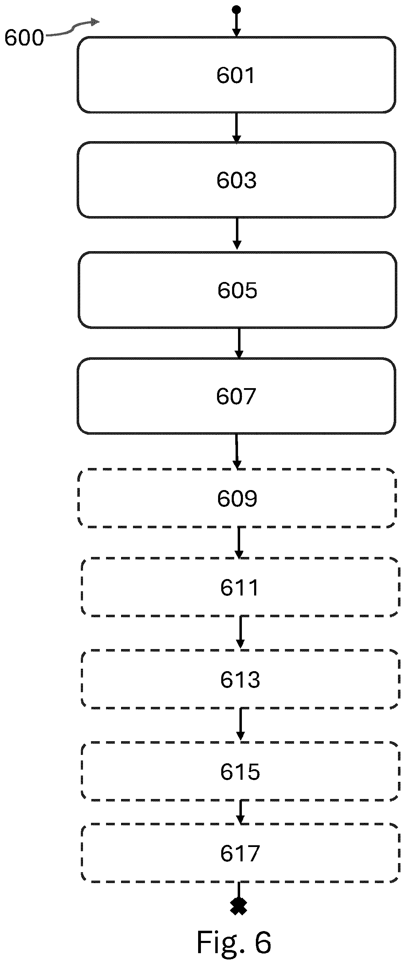

Fig. 6 provides a flowchart illustrating a method in accordance with the first exemplary aspect. The method may be computer implemented and may train a ML model for logistics robots. Method 600 initiates by providing a route to a logistics robot, for example by logistics platform 103, at step 601. The route comprises a start location, and a destination location. The route traverses, at least in part, a mapped public environment. At step 603 a route issue indication is obtained from the logistics robot, for example via the robot data reception module 301a. The route issue indication comprises a route issue location for a route issue. The route issue causes the logistics robot to fail to traverse the provided route as expected. At step 605 at least one map object corresponding to the route issue location is obtained from a map database, for example by the querying module 303a accessing the map database 105. At step 607 the ML model is trained to associate the map object with the route issue indication, for example by ML model module 305a. The method may terminate after step 607.

Optionally, at step 609 (after step 607), the ML model may be further trained to associate the at least one map object with the route issue outcome. The route issue outcome may indicate if the route issue was overcome or if it led to a route completion failure. The route issue outcome may be communicated as part of the route issue indication. At step 611, the ML model may optionally be further trained to associate the at least one map object with the energy consumption value, the energy consumption value indicating an amount of energy required by the logistics robot to overcome the route issue. The energy consumption value may, for example, be obtained similarly as part of the route issue indication. Optionally, at step 613, the method may further classify the map object based on a respective map object attribute, also exemplary obtained by the querying module 303a from the map database 105. The map object attribute may be associated with a physical characteristic of the map object. Optionally, at step 615, the ML may be further trained to associate the at least one map object with the dynamic condition information associated with the route issue location. The dynamic condition information may be for example obtained from the LBS platform 107 by the querying module 303a. Optionally, at step 617, a logistics robot type may be determined, for example by the logistics platform 103 via robot data reception module 301a. With the logistics robot type information, the ML model may be further trained to associate the logistics robot type with the map object. The optional further trainings may be, for example, performed by the ML module 305a. The method may optionally terminate after any of the steps 609-617.

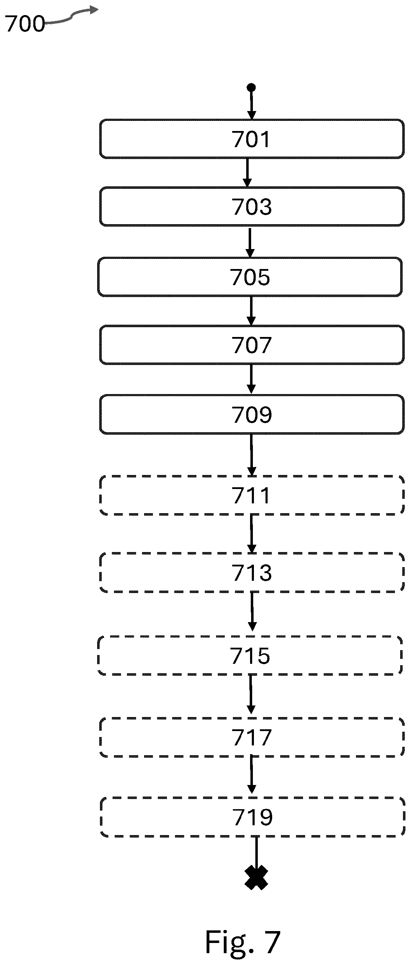

Fig. 7 a flowchart illustrating a method in accordance with the second exemplary aspect. The method may be computer implemented and may provide routing for logistics robots. Method 700 initiates by obtaining a route for a logistics robot at step 701, for example by Logistics Robot routing engine 303b. The route comprises a start location, and a destination location. The route traverses, at least in part, a mapped public environment. At step 703 at least one map object located on or adjacent to the route is retrieved from a map database, for example via querying module 301b from map database 105. At step 705 a first route issue indication likelihood associated with at least one map object is determined for a first logistics robot type using a machine learning (ML) model trained by associating map objects to route issue indications. The ML model has been trained at least for the first logistics robot type. For example, the first route issue indication likelihood may be determined by ML model module 305b. At step 707 a first route penalty value for a portion of the route where the map object is located on or adjacent to is calculated, based on the first route issue indication likelihood. The first route penalty value calculation may be performed, for example, by route penalty calculation module 307b. At step 709, the route is updated based on the calculated first route penalty value, for example by Logistics Robot routing engine 303b. The method may terminate after step 709.

Optionally, at step 711, a second route issue indication likelihood corresponding to the at least one map object may be determined for a second logistics robot type, using the ML model. The model may be further trained for the second logistics robot type. For example, the second route issue indication likelihood may be determined by ML model module 305b. At step 713 a second route penalty value for the portion of the route where the map object is located on or adjacent to may be calculated. The second route penalty value may be based on the second route issue likelihood. For example, the second route penalty value may be calculated by the route penalty calculation module 307b. At step 715, the first and second route penalty values may be compared. The comparison may be for example performed by the logistics platform 103. At step 719, an indication to select a logistics robot type may be provided based on the comparison of the first and second penalty values. Similarly, providing the indication to select may be for example performed by the logistics platform 103. Optionally, at step 719, the route may be updated to include a handover location in response to the first route issue indication likelihood being over a predetermined handover threshold. The handover location may be prior along the route to the map object. The method may optionally terminate after any of the steps 711-717 or 719.

Fig. 9 is a schematic illustration of examples of tangible and non-transitory computer-readable storage media according to the present invention that may for instance be used to implement memory device 203 of apparatus 200 Fig. 2, or any apparatus in accordance with the exemplary aspects disclosed herein. Fig. 9 shows a flash memory 900, which may for instance be soldered or bonded to a printed circuit board, a solid-state drive 901 comprising a plurality of memory chips (e.g. Flash memory chips), a magnetic hard drive 902, a Secure Digital (SD) card 903, a Universal Serial Bus (USB) memory stick 904, an optical storage medium 905 (such as for instance a CD-ROM or DVD) and a magnetic storage medium 906.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. Having the same meaning as the expression "A and/or B", the expression "at least one of A or B" may be used herein. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will be understood that all presented embodiments are only exemplary, and that any feature presented for a particular example embodiment may be used with any aspect on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program/system) may also be used in a corresponding manner in an example embodiment of any other category. It should also be understood that presence of a feature in the presented example embodiments shall not necessarily mean that this feature forms an essential feature and cannot be omitted or substituted.

The statement of a feature comprises at least one of the subsequently enumerated features is not mandatory in the way that the feature comprises all subsequently enumerated features, or at least one feature of the plurality of the subsequently enumerated features. Also, a selection of the enumerated features in any combination or a selection of only one of the enumerated features is possible. The specific combination of all subsequently enumerated features may as well be considered. Also, a plurality of only one of the enumerated features may be possible.

The sequence of all method steps presented above is not mandatory, also alternative sequences may be possible. Nevertheless, the specific sequence of method steps exemplarily shown in the figures shall be considered as one possible sequence of method steps for the respective embodiment described by the respective figure.

The subject-matter has been described above by means of example embodiments. It should be noted that there are alternative ways and variations which are obvious to a skilled person in the art and can be implemented without deviating from the scope of the appended claims.

## Claims

1. A computer-implemented method for training a machine learning (ML) model for logistics robots, the method comprising:
providing a route to a logistics robot, wherein the route comprises a start location, and a destination location, wherein the route traverses, at least in part, a mapped public environment;
obtaining, from the logistics robot, a route issue indication, wherein the route issue indication comprises a route issue location for a route issue, and wherein the route issue causes the logistics robot to fail to traverse the provided route as expected;
obtaining, from a map database, at least one map object corresponding to the route issue location; and,
training the ML model to associate the map object with the route issue indication.

2. The method of claim 1, wherein the route issue indication further comprises a route issue outcome indicating if the route issue:
i) was overcome or,
ii) led to a route completion failure,
the method further comprising:
further training the ML model to associate the at least one map object with the route issue outcome.

3. The method of claim 1 or 2, further comprising:
obtaining, from the logistics robot, an energy consumption value associated with the route issue indication, wherein the energy consumption value indicates an amount of energy required by the logistics robot to overcome the route issue;
further training the ML model to associate the at least map object with the energy consumption value.

4. The method of any preceding claim, wherein the at least one map object comprises at least one respective map object attribute associated with a physical characteristic of the at least one map object, and wherein the method further comprises classifying the map object based on the respective map object attribute.

5. The method of any preceding claim, the method further comprising:
obtaining a dynamic condition information associated with the route issue location, wherein the dynamic condition information comprises at least one of a weather condition, a mobility density condition, a hazard condition, a path accessibility condition, or a combination thereof; and
further training the ML model to associate the at least one map object with the dynamic condition information.

6. The method of any preceding claim, further comprising:
determining a logistics robot type, the logistics robot type comprising at least one of: a wheeled-type robot, legged-type robot, a humanoid-type robot, or a specific robot model; and,
further training the ML model to associate the logistics robot type with the map object.

7. A computer-implemented method for routing a logistics robot, the method comprising:
obtaining a route for a logistics robot, wherein the route comprises a start location, and a destination location, wherein the route traverses, at least in part, a mapped public environment;
retrieving, from a map database, at least one map object located on or adjacent to the route;
determining for a first logistics robot type, using a machine learning (ML) model trained by associating map objects to route issue indications, a first route issue indication likelihood associated with at least one map object, wherein the ML model has been trained at least for the first logistics robot type;
calculating, based on the first route issue indication likelihood, a first route penalty value for a portion of the route where the map object is located on or adjacent to; and,
updating the route based on the calculated first route penalty value.

8. The method of claim 7, wherein the obtained route is calculated based on a pedestrian route adjacent, at least in part, to a road link of the mapped public environment.

9. The method of claim 8, wherein the obtained route is further calculated based on a dynamic condition information of the pedestrian route or the adjacent road link, and wherein the dynamic condition information comprises at least one of a weather condition, a traffic condition, a mobility density condition, a hazard condition, a path accessibility condition, or a combination thereof.

10. The method of any of claims 7 - 9, further comprising:
determining for a second logistics robot type, using the ML model, a second route issue indication likelihood corresponding to the at least one map object, wherein the ML model has been further trained for the second logistics robot type;
calculating, based on the second route issue indication likelihood, a second route penalty value for the portion of the route where the map object is located on or adjacent to;
comparing the first and second penalty values; and,
providing an indication to select a logistics robot type based on the comparison.

11. The method of any of claims 7 - 10, wherein the ML model is further trained based on at least one of:
energy consumption values, wherein the energy consumption values indicate an amount of energy required by the logistics robot to overcome respective route issues;
dynamic condition information associated with route issue locations, wherein the dynamic condition information comprises at least one of a weather condition, a mobility density condition, a hazard condition, a path accessibility condition, or a combination thereof; and,
route issue outcomes, wherein the route issue outcomes indicate whether respective route issue conditions were i) overcome or ii) led to a route completion failure.

12. The method of any of claims 7 - 11, wherein the first or second logistics robot types comprise at least one of: a wheeled-type robot, legged-type robot, a humanoid-type robot, or a specific robot model.

13. The method of any of claims 7 - 12, further comprising, updating the route to include a handover location in response to the first route issue indication likelihood being over a predetermined handover threshold, wherein the handover location is prior along the route to the map object.

14. An apparatus comprising means configured for performing the computer-implemented method of any of claims 1-13.

15. A computer program product comprising instructions which, when the program is executed by a computer, cause the computer to carry out the computer-implemented method in accordance with any of claims 1-13.
